# EUROPEAN PATENT APPLICATION

(11) **EP 2 063 556 A2**
(43) Date of publication of application: **27.05.2009**
(21) Application number: 08019708.0
(22) Date of filing: 11.11.2008
(51) Int. Cl.: H04B 17/00, H04W 16/18

(54) **Communication apparatus, wave quality measuring system, wave quality measuring method and program**

(30) Priority: 20.11.2007 JP 2007300689
(71) Applicant: Nec Corporation, Tokyo 108-8001 (JP)
(72) Inventor: Tanaka, Hidenaru, Minato-ku, Tokyo (JP)
(74) Representative: Glawe, Delfs, Moll

(57) **Abstract**

A communication apparatus measures wave quality, analyzes measured data, and automatically conducts a subsequent operation. There are provided a communication apparatus, a wave quality automatic measuring system for a cellular network, a wave quality automatic measuring method, and a program in which the amount of data delivered from a measuring terminal to a server is reduced and measurement is automatically carried out on the side of the measuring terminal to thereby suppress the manual job to conduct the resetting for a subsequent measurement.

## Description

This application is based upon and claims the benefit of priority from Japanese patent application No. 2007-300689, filed on November 20, 2007, the disclosure of which is incorporated herein in its entirety by reference.

### BACKGROUND OF THE INVENTION

### Field of the Invention

The present invention relates to a technique to automatically measure quality of electromagnetic waves by a measuring terminal and measured data of the waves is analyzed on the measuring terminal side to autonomously conduct a subsequent operation based on results of the data analysis.

### Description of the Related Art

As a technique associated with the present invention, there is known a method in which measuring equipment is mounted on a traffic module, e.g., a taxi or a bus to automatically measure quality of electromagnetic waves for cellulars in a wide area without preparing any particular car and without dispatching any inspecting person.

In this method, the operations are remotely conducted. That is, through remote operations, measuring items or parameters are set and stored, wave quality is automatically measured and recorded, and results of the measurement are automatically transmitted.

Japanese Patent Laid-Open Publication Ser. No. 2007-049630 describes a technique for a telephone system. In the system, a wireless apparatus stores at least operation data which identifies information of communication quality as a target item. According to the operation data, data, the wireless apparatus obtains communication quality information associated therewith. The apparatus sends the information to a network controller. According to the information, the controller updates the operation data stored in the wireless apparatus. According to the updated data, the apparatus acquires the communication quality information associated therewith. It is hence possible to remotely and appropriately analyze a cause of, for example, an event taking place in the telephone system.

Description will now be given of a problem of the technique described above.

However, the technique is accompanied by the following problem, which likely reduces automatic measurement efficiency.

Since the terminal collects measured data to send the data to the data center on the network side and the center analyzes the collected data, the terminal must transmits all data required for the analysis to the center. Hence, the amount of data to be transmitted to the center is disadvantageously increased.

In a situation wherein if the center requires additional data as a result of analysis of the measured data, it is necessary to manually conduct resetting for a subsequent measurement. Also, it is required to manually reset the measuring parameters.

### SUMMARY

It is therefore an exemplary object of the present invention, which has been devised to solve the problem, to provide a communication apparatus, a wave quality automatic measuring system for a cellular network, a wave quality automatic measuring method, and a program in which the amount of data delivered from a measuring terminal to a server is reduced and measurement is automatically carried out on the side of the measuring terminal to thereby suppress the manual job to conduct resetting for a subsequent measurement.

To achieve the object, in accordance with a first aspect of the present invention, there is provided a communication apparatus for measuring quality of an electromagnetic wave, analyzing data obtained by measuring the quality of an electromagnetic wave, and automatically conducting a subsequent operation subsequent to the analyzing of the data.

To achieve the object in accordance with a second aspect of the present invention, there is provided a wave quality measuring system including a measuring terminal and a server. The measuring terminal includes a wave quality measuring unit that measures quality of an electromagnetic wave, an analysis unit that analyzes data obtained by measuring the quality of an electromagnetic wave, in the measuring terminal; a transmission unit that transmits a result of the analyzing of the data to the server on a network side, a storage unit that stores therein information of a call event and information of a position of occurrence of the event that are received from the server, a comparing unit that compares a position of the communication apparatus with the position of occurrence of the event stored in the storage unit, and a test change-over unit that conducts a change-over between test operations according to the position of the communication apparatus. The server includes an input unit that inputs a measuring configuration, a storage unit that stores the measuring configuration, a transmission unit that transmits the measuring configuration to the measuring terminal, a unit that creates a table including information of a call event and information of a position of occurrence of the event, and a transmission unit that transmits the table to the measuring terminal.

In accordance with a third aspect of the present invention, there is provided a wave quality measuring method including the steps to be conducted by a measuring terminal of measuring quality of an electromagnetic wave, analyzing data obtained by measuring the quality of an electromagnetic wave, and automatically conducting a subsequent operation subsequent to the analyzing of the data.

In accordance with a fourth aspect of the present invention, there is provided a program for making a measuring terminal execute the steps of measuring quality of an electromagnetic wave, analyzing data obtained by measuring the quality of an electromagnetic wave, and automatically conducting a subsequent operation subsequent to the analyzing of the data.

### BRIEF DESCRIPTION OF THE DRAWINGS

The objects and features of the present invention will become more apparent from the consideration of the following detailed description taken in conjunction with the accompanying drawings in which:
FIG. 1 is a schematic block diagram showing a configuration of a communication system in accordance with an exemplary embodiment of the present invention;
FIG. 2 is a flowchart showing a flow of processing in the exemplary embodiment of the present invention; and
FIG. 3 is a flowchart showing a processing flow of a method that uses results of measurement of the exemplary embodiment of the present invention to improve efficiency of measured data collection thereafter.

### EXEMPLARY EMBODIMENT

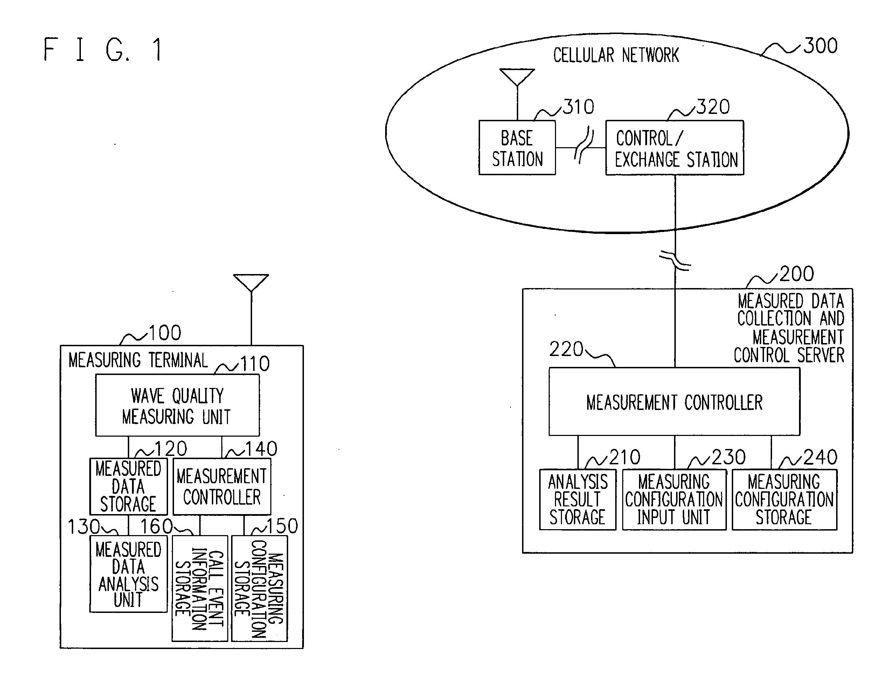

Referring next to the drawings, description will be given in detail of an exemplary embodiment of the present invention. FIG. 1 shows an exemplary embodiment of a wave quality automatic measuring system for a cellular network. The system includes a measuring terminal 100, a measured data collection and measurement control server 200, and a cellular network 300.

The measuring terminal 100 includes a wave quality measuring unit 110, a measured data storage 120, a measured data analysis unit 130, a measurement controller 140, a measuring configuration storage 150, and a call event information storage 160.

The server 200 includes an analysis result storage 210, a measurement controller 220, a measuring configuration input unit 230, and measuring configuration storage 240.

The cellular network 300 includes a base station 310 and a control/exchange station 320.

In operation, the measuring terminal 100 is installed in a traffic facility of which purpose is other than wave quality measurement, for example, a taxi, a bus, or a delivery truck to measure quality of electromagnetic waves on the cellular network 300.

The wave quality measuring unit 110 in the terminal 100 serves a function to measure quality of electromagnetic waves. The measured data storage 120 stores all data items measured by the measuring unit 110. The measured data analysis unit 130 analyzes data in the storage 120 to determine a cause of an event associated with a call connection and a call operation, for example, failure in a connection attempt or an abnormal disconnection during a call.

The measuring configuration storage 150 has a function to store setting items indicated from the network side for measurement, for example, a test type such as an originating test or a continuous call test; a test cycle, and analysis data to be analyzed. The measurement controller 140 refers to the setting items in the storage 150 to deliver an indication for a measurement to the wave quality measuring unit 110. The call event information storage 160 stores a type of a call event and positional information of occurrence of the event.

The measured data collection and measurement control server 200 connected to the network 300 receives an analysis result of measured data, via the base station 310 and the controll/exchange station 320 on the network 300, from the measuring terminal 100.

The analysis result storage 210 in the server 200 stores the analysis result of measured data received from the terminal 100. The measuring configuration input unit 230 includes an interface function for a measuring operator to input setting items for measurement. The measuring configuration storage 240 stores the setting items received from the input unit 230. The measurement controller 220 refers to the measuring configuration storage 240 to deliver setting items associated with the measurement via the cellular network 300 to the terminal 100.

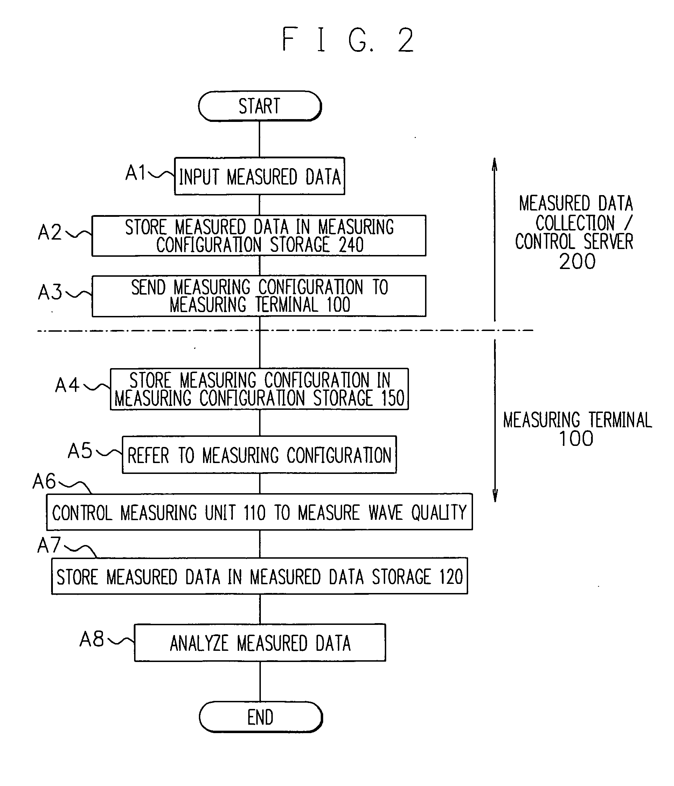

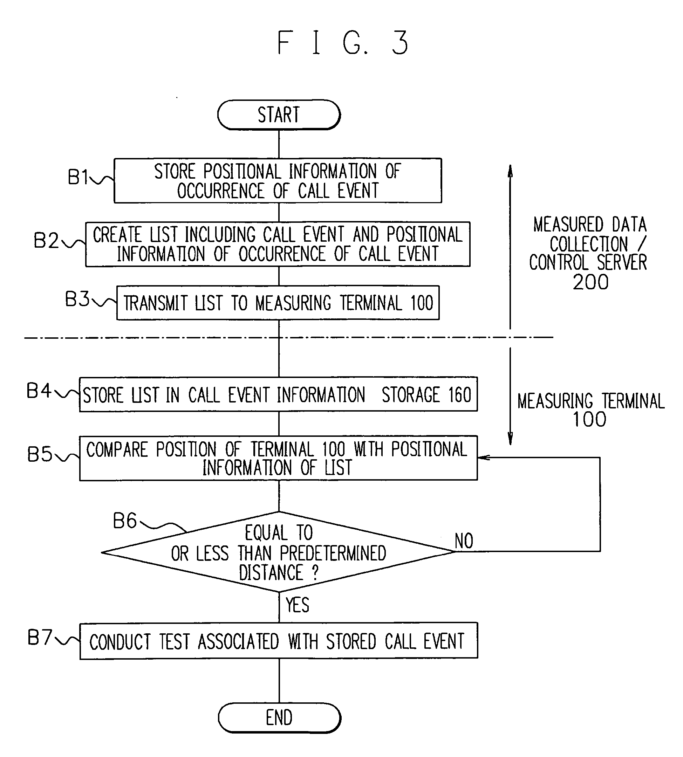

Next, operation of the exemplary embodiment will be described by referring to FIGS. 1 to 3.

First, the operator sets from the input unit 230 measuring items, e.g., a test type such as an originating test or a continuous call test; a test cycle, and analysis data to be analyzed (the setting items will be comprehensively referred to as a measuring configuration hereinbelow; step A1). The configuration is stored in the storage 240 (step A2).

The server 200 then refers to the storage 240 to transmit the measuring configuration via the cellular network 300 to the terminal 100 (step A3).

The terminal 100 receives and stores the configuration in the storage 150 (step A4).

The measurement controller 140 refers to the storage 150 (step A5) and controls the measuring unit 110 to measure items designated by the configuration to resultantly measure wave quality (step A6).

Data obtained by the measuring unit 110 is stored in the data storage 120 (step A7).

The analysis unit 130 analyzes the measured data (step A8). If an event is detected as a result of the analysis in the terminal 100, the terminal 100 can autonomously measure other data items to determine a cause of the event.

Next, description will be given of a method of improving the measured data collection efficiency on the basis of measurement results.

The server 200 stores, in the analysis result storage 210, the type of call event and the positional information of occurrence of the call event sent from the terminal 100 (step B1).

The measurement controller 220 refers to the storage 210 to create a list including the call event and the positional information (step B2) and delivers the list via the network 300 to the terminal 100 (step B3). If the system includes a plurality of measuring terminals 100, the controller 220 sends the list to each of the terminals 100. To reduce the amount of transmission data and the used area of the memory on each measuring terminal 100, the information of the list to be transmitted may also be limited to information associated with peripheral zones of an area being visited by the terminal 100.

The terminal 100 stores the list including the call event and the positional information in the information storage 160 (step B4).

The measurement controller 140 compares the position of the terminal 100 with that of the call event occurrence stored in the storage 160 (step B5). If it is determined that the difference or distance therebetween is equal to or less than a predetermined value (step B6), the controller 140 terminates the test operation and preferentially conducts a test operation according to the stored call event (step B7). If the position is a position where abnormal disconnection occurs, the controller 140 changes the test operation to a continuous call test operation and repeatedly obtains information at abnormal disconnection. The controller 140 resultantly collects data to determine a cause of occurrence of the call event.

Assume a situation wherein it is beforehand known that abnormal disconnection frequently occurs in a particular cell. In this case, when the measuring terminal enters the cell, the controller 140 may interrupt the measurement to change its operation to another operation mode.

By using two measuring units for the measurement, sending of a call and receiving of a call can be simultaneously conducted. For example, paging is additionally carried out in the call receiving flow. Therefore, it is possible to detect a problem which cannot be identified through the measurement using only one measuring unit.

In addition, if measured data is not delivered to the server, the terminal may be autonomously reset.

It is also possible to configure a system in which several tens of terminals operate for the measurement and in which each terminal acquires a measuring condition and the like from the server during the previous night of the day for the measurement such that the operation is dynamically dispersed in groups of terminals. In a situation wherein a second terminal is approaching a first terminal, it is also possible, for example, to prevent any unnecessary measurement or to avoid duplicated measurement by two terminals as below. Upon recognizing the situation, the first terminal instructs the operator thereof to take a route to be apart from the second terminal.

In the exemplary embodiment of the wave quality automatic measuring system, since data collected through the automatic measurement is analyzed on the terminal side and only results of the analysis are fed from the terminal to the network side, the amount of data to be transmitted can be advantageously reduced.

Moreover, if it is determined as a result of the analysis that additional data is required for the system, the measuring terminal automatically changes its operation mode. This advantageously suppresses the manual job to conduct the setting for a subsequent measurement.

In accordance with the present invention, the measuring terminal installed in a taxi is not employed only for the measurement, but it is possible to provide a chargeless communication service for a fare of the taxi. For example, the measuring terminal is connected via a network such as Wave Large Area Network (WLAN) to a terminal of the fare. The measuring terminal actually carries out communication in addition to the measurement. That is, it is possible to communicate audio signals and data signals. Also, the terminal is available to access particular contents and to download games. The communication may also be free of charge.

If the measuring terminal is arranged in a bus, all or part of the passengers of the bus may download the measuring software onto their terminals. The passengers conduct the measurement by use of their terminals for the system. In consideration of the measurement, the passengers receive, for example, a service such as a discount of the bus fare. The measurement conducted by a plurality of measuring terminals brings about an advantage to simultaneously accomplish mutually different types of measurements.

According to another application example, logs of measurements on the terminals side may be collated with those on the infrastructure side to advantageously recognize precise factors of the cause of an event detected by the measurement. To facilitate the collation, the logs may include a common IDentifier (ID).

Description has been given of various modes of the first exemplary embodiment. However, the present invention is not restricted by the exemplary embodiment, but various modifications and changes of the exemplary embodiment are possible without departing from the spirit and scope of the present invention. For example, programs to implement the functions respectively of the measuring terminal 100 and the measured data collection and measurement control server 200 may be respectively installed therein such that the terminal 100 and the server 200 implement their processings by executing the programs in the respective units. The programs may be stored in a computer readable recording medium such as a Compact Disk Read Only Memory (CD-ROM) or a magneto-optical disk to be sent using transmission waves therefrom via transmission media, e.g., the internet and a telephone line to another computer system.

In accordance with the present invention, there are obtained advantages in which, for example, the amount of data to be delivered from the measuring terminal to the server is reduced, and the measurement is automatically carried out on the terminal side to remove the manual job necessary to carry out the resetting for a subsequent measurement.

While the present invention has been described with reference to the particular illustrative embodiments, it is not to be restricted by those embodiments but only by the appended claims. It is to be appreciated that those skilled in the art can change or modify the embodiments without departing from the scope and spirit of the present invention.

An example 1 describes a communication apparatus for measuring quality of an electromagnetic wave, analyzing data obtained by measuring the quality of an electromagnetic wave, and automatically conducting a subsequent operation subsequent to the analyzing of the data.

An example 2 describes a communication apparatus, comprising:
wave quality measuring means for measuring quality of an electromagnetic wave;
analysis means for analyzing data obtained by measuring the quality of an electromagnetic wave, in a measuring terminal;
transmission means for transmitting a result of the analyzing of the data to a server on a network side;
storage means for storing therein information of a call event and information of a position of occurrence of the event that are received from the server;
comparing means for comparing a position of the communication apparatus with the position of occurrence of the event stored in the storage means; and
test change-over means for conducting a change-over between test operations according to the position of the communication apparatus.

An example 3 describes a wave quality measuring system, comprising a measuring terminal and a server, the measuring terminal, comprising:
wave quality measuring means for measuring quality of an electromagnetic wave;
analysis means for analyzing data obtained by measuring the quality of an electromagnetic wave, in the measuring terminal;
transmission means for transmitting a result of the analyzing of the data to the server on a network side;
storage means for storing therein information of a call event and information of a position of occurrence of the event that are received from the server;
comparing means for comparing a position of the communication apparatus with the position of occurrence of the event stored in the storage means; and
test change-over means for conducting a change-over between test operations according to the position of the communication apparatus;
the server, comprising:
   input means for inputting a measuring configuration;
   storage means for storing the measuring configuration;
   transmission means for transmitting the measuring configuration to the measuring terminal;
   means for creating a table including information of a call event and information of a position of occurrence of the event; and
   transmission means for transmitting the table to the measuring terminal.

An example 4 describes a wave quality measuring method, comprising the steps to be conducted by a measuring terminal of:
measuring quality of an electromagnetic wave;
analyzing data obtained by measuring the quality of an electromagnetic wave; and
automatically conducting a subsequent operation subsequent to the analyzing of the data.

An example 5 describes a wave quality measuring method, comprising:
the steps to be conducted by a measuring terminal of;
measuring quality of an electromagnetic wave,
analyzing data obtained by measuring the quality of an electromagnetic wave, in the measuring terminal,
transmitting a result of the analyzing of the data to a server on a network side,
storing information of a call event and information of a position of occurrence of the event that are received from a server,
comparing a position of a communication apparatus with the position of occurrence of the event stored in the storing step, and
conducting a change-over between test operations according to the position of the communication apparatus; and
the steps to be conducted by a server of:
   inputting a measuring configuration;
   storing the measuring configuration;
   transmitting the measuring configuration to the measuring terminal;
   creating a table including information of a call event and information of a position of occurrence of the event; and
   transmitting the table to the measuring terminal.

An example 6 describes a program for making a measuring terminal execute the steps of:
measuring quality of an electromagnetic wave;
analyzing data obtained by measuring the quality of an electromagnetic wave; and
automatically conducting a subsequent operation subsequent to the analyzing of the data.

## Claims

1. A communication apparatus for measuring quality of an electromagnetic wave, analyzing data obtained by measuring the quality of an electromagnetic wave, and automatically conducting a subsequent operation subsequent to the analyzing of the data.

2. A communication apparatus, comprising:
wave quality measuring means for measuring quality of an electromagnetic wave;
analysis means for analyzing data obtained by measuring the quality of an electromagnetic wave, in a measuring terminal;
transmission means for transmitting a result of the analyzing of the data to a server on a network side;
storage means for storing therein information of a call event and information of a position of occurrence of the event that are received from the server;
comparing means for comparing a position of the communication apparatus with the position of occurrence of the event stored in the storage means; and
test change-over means for conducting a change-over between test operations according to the position of the communication apparatus.

3. A wave quality measuring system, comprising a measuring terminal and a server, the measuring terminal, comprising:
wave quality measuring means for measuring quality of an electromagnetic wave;
analysis means for analyzing data obtained by measuring the quality of an electromagnetic wave, in the measuring terminal;
transmission means for transmitting a result of the analyzing of the data to the server on a network side;
storage means for storing therein information of a call event and information of a position of occurrence of the event that are received from the server;
comparing means for comparing a position of the communication apparatus with the position of occurrence of the event stored in the storage means; and
test change-over means for conducting a change-over between test operations according to the position of the communication apparatus;
the server, comprising:
input means for inputting a measuring configuration;
storage means for storing the measuring configuration;
transmission means for transmitting the measuring configuration to the measuring terminal;
means for creating a table including information of a call event and information of a position of occurrence of the event; and
transmission means for transmitting the table to the measuring terminal.

4. A wave quality measuring method, comprising the steps to be conducted by a measuring terminal of
measuring quality of an electromagnetic wave;
analyzing data obtained by measuring the quality of an electromagnetic wave; and
automatically conducting a subsequent operation subsequent to the analyzing of the data.
5. A wave quality measuring method, comprising:
the steps to be conducted by a measuring terminal of;
measuring quality of an electromagnetic wave,
analyzing data obtained by measuring the quality of an electromagnetic wave, in the measuring terminal,
transmitting a result of the analyzing of the data to a server on a network side,
storing information of a call event and information of a position of occurrence of the event that are received from a server,
comparing a position of a communication apparatus with the position of occurrence of the event stored in the storing step, and
conducting a change-over between test operations according to the position of the communication apparatus; and
the steps to be conducted by a server of:
inputting a measuring configuration;
storing the measuring configuration;
transmitting the measuring configuration to the measuring terminal;
creating a table including information of a call event and information of a position of occurrence of the event; and
transmitting the table to the measuring terminal.
6. A program for making a measuring terminal execute the steps of:
measuring quality of an electromagnetic wave;
analyzing data obtained by measuring the quality of an electromagnetic wave; and
automatically conducting a subsequent operation subsequent to the analyzing of the data.
